# EUROPEAN PATENT SPECIFICATION

(11) **EP 2 008 903 B1**
(45) Date of publication and mention of the grant of the patent: **29.02.2012**
(21) Application number: 07425388.1
(22) Date of filing: 25.06.2007
(51) Int. Cl.: B60W 50/02, B60G 17/0185, B60T 8/88, G05B 9/03

(54) **Limp-home circuit arrangement for passenger compartment and bodywork functions**
Limp-Home-Schaltungsanordnung für einen Insassenraum- und Karosseriefunktionen
Agencement de circuit de secours pour fonctions de compartiment passager et de caisse

(43) Date of publication of application: 31.12.2008
(73) Proprietor: Magneti Marelli S.p.A., 20011 Corbetta (MI) (IT)
(72) Inventor: Costa, Daniele, 10078 Venaria Reale (Torino) (IT); Tuiach, Mirko, 10078 Venaria Reale (Torino) (IT)
(74) Representative: Deambrogi, Edgardo

(56) References cited:
- DE-A1- 19 716 197
- GB-A- 2 355 081

## Description

The present invention concerns the emergency management of passenger compartment and bodywork functions in a vehicle, and more specifically a circuit arrangement for controlling the passenger compartment and bodywork devices of a vehicle, having an emergency function for maintaining minimum assured operability of said devices in a travelling vehicle, should there be a fault in the electronic unit responsible for control thereof.

In a vehicle, one or more electronic control units are responsible for monitoring and managing the functions of the vehicle, for example for controlling the drive system, the braking systems and the dynamics in general, the safety systems and the passenger compartment/bodywork devices, such as (external/internal) lights, windscreen wiper and comfort devices in general, and access control devices (for closing and locking the doors).

For safety reasons there exists the need to maintain the functional condition of the on-board systems of the vehicle in the event of faults affecting the operating logic (software bugs) or the electronic circuits which form it (hardware defects in the control circuits or the oscillator of the microcontroller device of the unit) so as to allow the vehicle to reach an emergency destination in a safe condition, usually until the engine is switched off and the key is removed.

For highly critical functions (such as, for example, control of the drive system, the dynamics and the safety functions) costly redundant hardware is envisaged, with duplication of the associated control units, so as to ensure full management of the vehicle functions in the event of malfunctioning of the main unit by means of a substantially identical auxiliary unit.

For less critical functions, as in the case of the passenger compartment and bodywork functions, such as lighting, comfort and access control, it is accepted that these functions can to a large degree be dispensed with in the event of a malfunction, because they are mostly of a secondary nature and not critical for the safe travel of the vehicle. Some of these functions, however, cannot be totally excluded since they could give rise to real danger conditions, (think of the external lights of the vehicle or the windscreen wiper system should there be a malfunction during travel at night time or in rainy conditions), where the vehicle must be able to complete the journey in safe conditions, with full efficiency of certain minimum passenger compartment/bodywork functions.

In this case, it is a somewhat expensive solution to duplicate the control unit responsible for managing these functions in order to remedy faults, and it is preferred to combine with (or incorporate into) this unit a simplified emergency circuit which allows the at least critical functions to be enabled until the vehicle can be taken in for repair, i.e. generally until the vehicle engine is switched off and the key removed, following which a major malfunction of the control unit does not allow re-initialization of the unit for renewed start-up, resulting in any case in the vehicle remaining immobilized for repair or replacement of the faulty components.

This emergency function in an impaired mode is better known as the "limp-home" function.

The simplest design of a limp-home function envisages that the control unit is automatically set to the emergency operating condition where the simplified emergency circuit forcibly activates the on-board devices (e.g.: lights, windscreen wiper system), operability of which is any case required, irrespective as to whether there is the need for it or the appropriate conditions exist, without any possibility of control by the driver. This means that the lights, and possibly also the windscreen wiper devices, will be activated even in adequate light conditions and when it is not raining.

In this case, excessive simplification of the emergency circuit, which results in loss of physical control over operation of the abovementioned devices, creates inconvenience and problems for the person driving as well as - in some cases - an excessive use of energy, this being critical in a defective condition of the vehicle.

A further disadvantage of the known solution consists in the fact that it excludes necessarily, or renders entirely unusable, certain functions which are useful from a safety point of view, such as, for example, the availability of the stop lights for signalling braking of a vehicle. In fact these lights fulfil their function precisely since they may be activated selectively depending on the travel conditions of the vehicle and cannot be kept permanently switched on (as in the case of parking lights or dipped-beam headlights), otherwise they are no longer effective.

GB 2 355 081 describes for example such a limp-home circuit arrangement according to the preamble of claim 1.

The object of the present invention is to overcome the disadvantages of the prior art by providing a circuit device for controlling the passenger compartment and bodywork devices of a vehicle, which has an emergency function for maintaining minimum assured operability of said devices, based on a simplified emergency circuit which offers the driver of the vehicle a degree of control as regards activation/deactivation of the devices in the event of an emergency.

A further object of the invention is to provide a control device for maintaining minimum emergency operability for as large a number of passenger compartment/bodywork devices as possible and also using multiple commands.

Another object of the invention is to provide a control arrangement for the passenger compartment and bodywork devices of a vehicle, having emergency functions which are able to remedy different types of malfunctions affecting the main control unit.

Yet another object of the invention is to provide a control arrangement which ensures activation of a minimum emergency operating configuration of the passenger compartment/bodywork devices also following switching off of the vehicle engine and disconnection of the electric power supply.

According to the present invention these objects are achieved by means of a circuit arrangement for controlling the passenger compartment and bodywork devices of a vehicle, having the characteristic features described in Claim 1.

Particular embodiments form the subject of the dependent claims.
Further advantages and characteristic features of the present invention will become clear from the detailed description which follows, provided with reference to the accompanying drawings provided purely by way of a non-limiting example in which:
Figure 1 shows schematically the control circuit arrangement according to the invention; and
Figure 2 shows a circuit detail of the arrangement according to Figure 1.

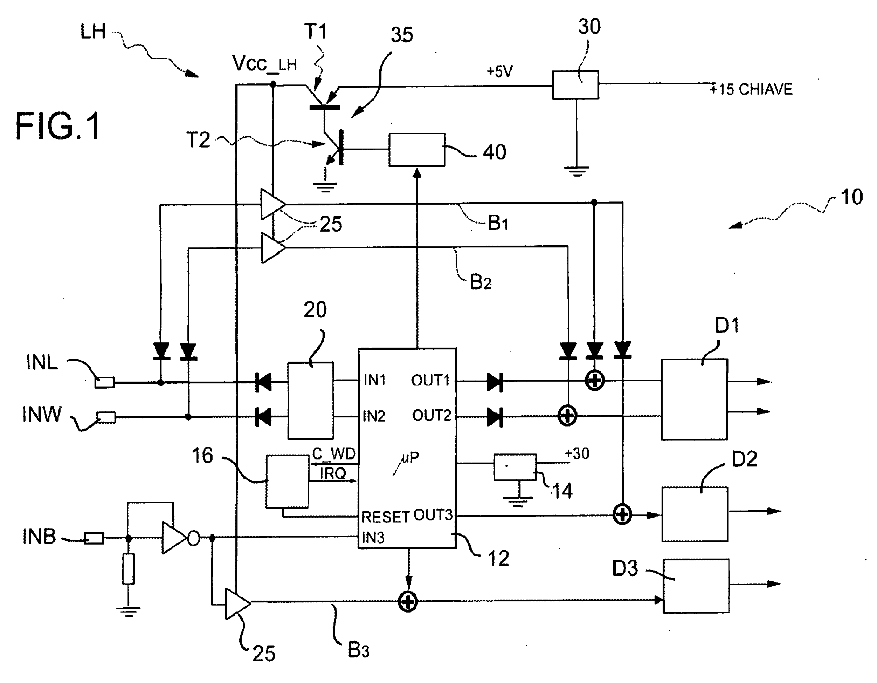

In Figure 1, 10 denotes overall a control circuit arrangement for the passenger compartment and bodywork devices of a vehicle, comprising a main microprocessor control unit 12 powered by the battery of the vehicle (+30) via a voltage regulator 14. A watchdog device 16 is situated alongside the control unit 12 in order to monitor correct operation thereof and, more particularly, is adapted to receive from the unit 12 periodic reset signals C_WD which are generated inside the unit and in response to which it is arranged to emit a response signal IRQ. A RESET input of the unit is able to receive from the watchdog device 16 and from the regulator 14 signals for resetting the unit in the event of malfunctions or undervoltage, for which an attempt at restarting the system is required.

A plurality of control inputs IN1, IN2, IN3 of the unit 12 are connected to a corresponding plurality of inputs of the circuit arrangement in order to receive commands for activation or selection of the passenger compartment and bodywork devices of a vehicle. For example, the figures show a light command and selection input INL, an input for activating and selecting the speed of the windscreen wiping device INW, both connected to the unit 12 by means of respective decoupling diodes and an input interface 20 for processing the signals as well as an input for signalling the pressure of the brake pedal INB, connected to the unit 12 by means of an acquisition interface.

The signal processing interface 20 comprises, for each input INL, INW, a respective pull-up resistor for connection with a power supply voltage (generally, 5V) derived from the regulator by means of an enable switch (not shown) directly controlled by the control unit, and an RC cell including a series resistor and a parallel capacitor, from the terminals of which the input voltage to an A/D converter circuit of the unit 12 is drawn.

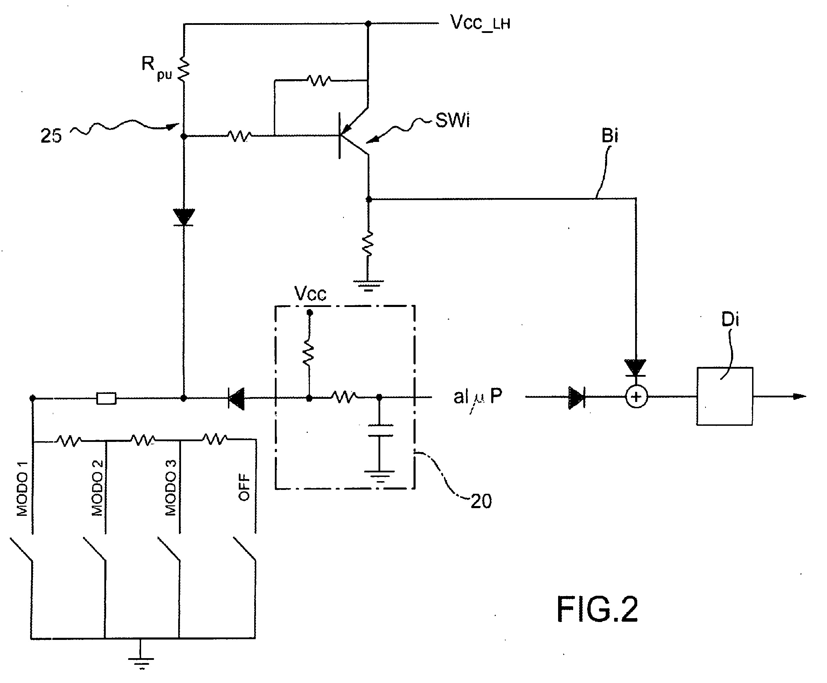

The inputs may be associated with ordinary switched command circuits, for example including an activation/deactivation switch for establishing/interrupting a connection to a reference potential (ground) or to command circuits of the multiple selection, for example resistive coding type, including a bundle of parallel branches with a different resistive characteristic, each including its own activation/deactivation switch adapted to establish/interrupt a respective connection to a reference potential (ground), as shown in the example according to Figure 2.

By means of a plurality of control outputs OUT1, OUT2, OUT3 the unit 12 provides signals to driving circuits D1, D2, D3 of the on-board devices for actuation of the commands received, in the example for driving the dipped-beam headlights of the vehicle (D1), the windscreen wiping device (D1), the parking lights (D2) and the stop light (D3). In detail, the driving circuit D1 controls operation of the windscreen wiping device at a single speed and continuously, as used also in the limp-home emergency control system, while another driving circuit (not shown) is arranged to control operation of the windscreen wiping device at the other speeds and in the modes envisaged. The control unit is programmed to generate the driving signals depending on the input commands received, in fact establishing a command path between inputs and outputs of the control arrangement in a normal operating condition.

An emergency circuit of the control arrangement 10, which is associated with the control unit 12, is denoted overall by LH and comprises a plurality of parallel command branches B₁, B₂, B₃ arranged so as to bypass the control unit 12 and connect directly the switched inputs INL, INW and INB to the driving circuits D1, D2, D3 of the on-board devices.

Each bypass branch includes an enable and driving port 25 connected to a power supply line of the circuit LH, which is connected to a vehicle power supply source by means of the start-up switch (+15, key).

The power supply line incorporates a regulator circuit 30 adapted to provide a regulated voltage (for example, 5V) for supplying the enable and driving ports 25 and, downstream thereof, selector means for enabling activation of the circuit LH.

With reference to the detailed circuit diagram shown in Figure 2, each enable and driving port 25 includes a pull-up resistor Rₚᵤ directly connected to a voltage V_{CC_LH} selectively available downstream of the selector means, and an enable switching device SWᵢ (in the embodiment shown, a bipolar transistor) the control (base) terminal of which is connected to the associated command input and the output (collector) terminal of which is connected to the associated command branch B;.

The selector means for enabling activation of the circuit LH include, in the preferred embodiment, a switching arrangement 35 of bipolar transistors, adapted to establish or exclude the connection of the regulated voltage output of the voltage regulator 30 to the enable inputs of the ports 25, depending on a trigger signal emitted by a timer device 40, the input of which is controlled by a reset signal emitted by the control unit 12.

In detail, the switching arrangement 35 has a first bipolar transistor T1, of the p-n-p type, having the collector terminal connected to the enable inputs of the ports 25, the emitter terminal connected to the output of the voltage regulator 30 and the base terminal connected to the collector terminal of a second bipolar transistor T2, of the n-p-n type, the emitter terminal of which is connected to a ground potential and the base terminal of which is connected to the output of the timer 40.

The timer device 40 receives power from the start-up switch by means of the regulator 30 and is arranged to emit at its output a trigger signal upon exceeding a predetermined activation time limit value, for example a count limit value in the case of a counter design or a time value in the case of an analogue design, determined by an RC time constant.

According to the arrangement of the invention, activation of the emergency circuit LH is exclusive, as an alternative to the action of the control unit 12, differently from an OR arrangement of two control units according to the prior art, where both the units are active and simultaneously receive signals, so as to ensure rapid reaction times in the event of a fault.

In the normal operating condition, the main microprocessor control unit 12 is arranged to emit periodically a signal for resetting the timer 40 (zeroing the count value of a counter or discharging the capacitance of an RC cell) before the predetermined time limit value is reached.

The reset signal is generated periodically, conveniently with a period (5ms) substantially less than the required activation time (100ms).

When a fault occurs in the control unit or its voltage regulator 14, the watchdog device 16 no longer receives from the control unit 12 the periodic reset signals C_WD generated inside the unit and emits a reset signal to the RESET input of the unit for an attempted restart. If unsuccessful, since the control unit 12 is no longer operative, it does not emit any signal for resetting the timer 40 so that, once a predetermined wait time interval has lapsed, the timer reaches the predetermined time limit value and emits the trigger signal at its output. This causes conduction of the transistor T2 and, in cascade, of the transistor T1, so that the enable and driving ports 25 of the branches of the emergency circuit LH receive the power supply from the regulator 30. The voltage V_{CC_LH} which is established downstream of the regulator enables the switch SWᵢ and at the same time constitutes the pull-up voltage (via Rₚᵤ) for enabling "digital" reading of the associated command input. In this way, a direct control path for the passenger compartment/bodywork devices is defined, from the command inputs INL, INW, INB to the driving outputs D1, D2, D3, which is an alternative to the control unit.

In the case where the command inputs to which the emergency circuit is applied are resistive-coding multiple-selection inputs, the pull-up resistance is conveniently chosen so as to allow recognition, in a simplified manner, of a configuration for deactivating the command and a unique ("digital reading") activation configuration, independently of the plurality of activation configurations possible during normal operation and for this reason recognizable by the microprocessor of the control unit, for example for controlling different lighting options (parking lights, dipped-beam headlights, automatic lighting sensor system) or different windscreen wiping speeds.

Advantageously, the circuit LH always allows transfer to the actuators of the passenger compartment/bodywork devices of the commands entered at the inputs of the control arrangement, so that it is always possible, even in emergency conditions, to manage activation or deactivation of the driving lights, the windscreen wiping devices, the stop lights and other devices necessary according to the driver's needs.

Moreover, the particular power supply of the emergency circuit LH (via key) allows one to make use of the emergency functions independently of stoppage or cut-out of the vehicle since, during a subsequent emergency activation request in response to which the control unit can no longer react and perform auto-initialization, it is able to receive power via its own line. Since the timer is independent of the control unit during its operation, its time count will be started by its own power supply and, if no reset signal is received from the unit 12, it will immediately reach the predetermined time limit value and will emit at its output the trigger signal, so that the enable and driving ports 25 of the branches of the emergency circuit LH will receive the power supply from the regulator 30 and will be able to establish again a direct control path for the passenger compartment/bodywork devices, from the command inputs INL, INW, INB to the driving outputs D1, D2, D3.

Conveniently, the arrangement according to the invention maintains the independence of the emergency circuit from the voltage regulator circuit associated with the control unit, so as to respond efficiently to malfunctions not only of the control unit microprocessor, but also of the regulator, increasing the range of operating malfunctions for which emergency action is possible.

Obviously, without modifying the principle of the invention, the embodiments and the constructional details may be widely varied with respect to that described and illustrated purely by way of a non-limiting example, without thereby departing from the scope of protection of the present invention, as defined by the accompanying claims.

## Claims

1. An electrical circuit arrangement (10) for controlling the passenger compartment and bodywork devices of a road vehicle, having a plurality of command inputs (INL, INW, INB) adapted to receive commands for activating said devices, and a plurality of driving outputs (DI, D2, D3) adapted to emit signals for driving said devices so as to implement the input commands received, said circuit arrangement (10) comprising a control unit (12) coupled to said command inputs (INL, INW, INB) and to said outputs (D1, D2, D3) and arranged to recognize the input commands received and generate corresponding output driving signals so as to establish a command path in a normal operating condition,
**characterized in that** it comprises a limp-home emergency circuit (LH) including a plurality of connection branches (B₁, B₂, B₃) adapted to connect said command inputs (INL, INW, INB) to respective driving outputs (D1, D2, D3) by means of respective alternative command paths which bypass the control unit (12), said branches (B₁, B₂, B₃) comprising enable means (25, 35, 40) enabling said alternative command paths depending on recognition of a malfunction operating condition of said unit (12).

2. Arrangement (10) according to Claim 1, in which said enable means (25, 35, 40) comprise switching means (35) arranged between said branches (B₁, B₂, B₃) and a power supply node (V_{cc_LH}), adapted to assume an inhibiting condition, where they exclude the connection of said branches (B₁, B₂, B₃) to the power supply node (V_{CC-LH}) and to the respective command input (INL, INW, INB), and a conducting condition, where they cause the connection of said branches (B₁, B₂, B₃) to the power supply node (V_{CC}__{LH}) and to the respective command input (INL, INW, INB).

3. Arrangement (10) according to Claim 2, in which said switching means (35) comprise a switching arrangement adapted to be controlled during conduction by timer means (40) arranged to recognize a defective operating condition of the control unit (12).

4. Arrangement (10) according to Claim 2 or 3, in which said power supply node (V_{CC_LH}) is connected to a power supply voltage source of the vehicle by means of the on-board start-up switch.

5. Arrangement (10) according to Claim 4, in which said power supply node (V_{CC_LH}) is adapted to receive a power supply voltage from respective voltage regulating means (30) powered by said power supply voltage source and independent of voltage regulating means (14) arranged to supply power to the control unit (12).

6. Arrangement (10) according to Claim 3, in which said timer means (40) comprise a counter circuit.

7. Arrangement (10) according to Claim 3, in which said timer means (40) have an RC time constant.

8. Arrangement (10) according to Claim 3, in which said timer means (40) have a reset input adapted to receive reset signals, periodically emitted by the control unit (12) and adapted to reset the time count of said timer means (40) before a predetermined time limit value is reached.

9. Arrangement (10) according to Claim 8, in which the signal for resetting the timer means (40) is a periodic signal generated by the control unit (12), with a period at least one order of magnitude less than the required activation time.

10. Arrangement (10) according to Claim 8, in which said timer means (40) are arranged to emit a signal triggering the conduction of said switching arrangement (35) when said predetermined time limit value is exceeded.

11. Arrangement (10) according to any one of Claims 3 to 10, in which said timer means (40) are adapted to receive power from the on-board start-up switch via said voltage regulating means (30).

12. Arrangement (10) according to Claim 3, in which said enable means (25, 35, 40) comprise an enable and driving circuit (25) for each connection branch (B₁), B₂, B₃), which includes a pull-up resistor (Rₚᵤ) adapted to connect the associated command input (INL, INW, INB) to said power supply node (V_{CC_LH}), and an enable switching device (SWᵢ), the control terminal of which is coupled to the associated command input (INL, INW, INB) and the output terminal of which is coupled to the associated branch (B₁, B_{2,} B₃) for connection to the respective driving output (D1, D2, D3).

13. Arrangement (10) according to Claim 12, in which said pull-up resistor (Rₚᵤ) has an electric resistance value such as to render distinguishable a configuration for deactivating a command from a general configuration for activating said command, independently of the plurality of activation configurations possible in the case of resistive-coding multiple-selection command inputs (INL, INW).

14. Arrangement (10) according to Claim 3, in which said switching arrangement (35) has a first bipolar transistor (T1) having the collector terminal able to be connected in a controlled manner to said command inputs (INL, INW, INB), the emitter terminal connected to said voltage regulating means (30) and the base terminal connected to the collector terminal of a second bipolar transistor (T2), the emitter terminal of which is connected to a reference potential and the base terminal of which is connected to said timer means (40).

## Patentansprüche

1. Elektrische Schaltungsanordnung (10) zum Steuern des Fahrgastraums und der Karosserievorrichtungen eines Straßenfahrzeugs, die mehrere Befehlseingänge (INL, INW, INB), die beschaffen sind, um Befehle zum Aktivieren der Vorrichtungen zu empfangen, und mehrere Ansteuerausgänge (D1, D2, D3), die beschaffen sind, um Signale zum Ansteuern der Vorrichtungen zu emittieren, um die empfangenen Eingangsbefehle zu implementieren, besitzt, wobei die Schaltungsanordnung (10) eine Steuereinheit (12) umfasst, die an die Befehlseingänge (INL, INW, INB) und die Ausgänge (D1, D2, D3) gekoppelt ist und die beschaffen ist, um die empfangenen Eingangsbefehle zu erkennen und die entsprechenden Ausgangs-Ansteuersignale zu erzeugen, um einen Befehlsweg in einem normalen Betriebszustand herzustellen,
**dadurch gekennzeichnet, dass** sie eine Heimfahr-Notfallschaltung (LH) umfasst, die mehrere Verbindungszweige (B₁, B₂, B₃) enthält, die beschaffen sind, um die Befehlseingänge (INL, INW, INB) mittels jeweiliger alternativer Befehlswege, die die Steuereinheit (12) umgehen, mit den entsprechenden Ansteuerausgängen (D1, D2, D3) zu verbinden, wobei die Zweige (B₁, B₂, B₃) Freigabemittel (25, 35, 40) umfassen, um die alternativen Befehlswege in Abhängigkeit von der Erkennung eines Fehlfunktions-Betriebszustands der Einheit (12) freizugeben.

2. Anordnung (10) nach Anspruch 1, wobei die Freigabemittel (25, 35, 40) Schaltmittel (35) umfassen, die zwischen den Zweigen (B₁, B₂, B₃) und einem Leistungsversorgungsknoten (V_{CC_LH}) angeordnet sind und die beschaffen sind, um einen Sperrzustand, in dem sie die Verbindung der Zweige (B₁, B₂, B₃) mit dem Leistungsversorgungsknoten (V_{CC_LH}) und dem entsprechenden Befehlseingang (INL, INW, INB) ausschließen, und einen Durchschaltzustand, in dem sie die Verbindung der Zweige (B₁, B₂, B₃) mit dem Leistungsversorgungsknoten (V_{CC_LH}) und dem entsprechenden Befehlseingang (INL; INW, INB) veranlassen, anzunehmen.

3. Anordnung (10) nach Anspruch 2, wobei die Schaltmittel (35) eine Schaltanordnung umfassen, die beschaffen ist, um während des Durchschaltens durch Zeitgebermittel (40) gesteuert zu werden, die beschaffen sind, um einen fehlerhaften Betriebszustand der Steuereinheit (12) zu erkennen.

4. Anordnung (10) nach Anspruch 2 oder 3, wobei der Leistungsversorgungsknoten (V_{CC_LH}) mittels des bordeigenen Anlasserschalters mit einer Leistungsversorgungs-Spannungsquelle des Fahrzeugs verbunden ist.

5. Anordnung (10) nach Anspruch 4, in der der Leistungsversorgungsknoten (V_{CC_LH}) beschaffen ist, um eine Leistungsversorgungsspannung von entsprechenden Spannungsregulierungsmitteln (30) zu empfangen, die durch die Leistungsversorgungs-Spannungsquelle mit Energie versorgt werden und die unabhängig von den Spannungsregulierungsmitteln (14) sind, die beschaffen sind, um Leistung an die Steuereinheit (12) zu liefern.

6. Anordnung (10) nach Anspruch 3, wobei die Zeitgebermittel (40) eine Zählerschaltung umfassen.

7. Anordnung (10) nach Anspruch 3, wobei die Zeitgebermittel (40) eine RC-Zeitkonstante besitzen.

8. Anordnung (10) nach Anspruch 3, wobei die Zeitgebermittel (40) einen Rücksetzeingang besitzen, der beschaffen ist, um Rücksetzsignale zu empfangen, die von der Steuereinheit (12) periodisch emittiert werden, und die beschaffen sind, um die Zeitzählung der Zeitgebermittel (40) zurückzusetzen, bevor ein vorgegebener Zeitgrenzwert erreicht ist.

9. Anordnung (10) nach Anspruch 8, wobei das Signal zum Rücksetzen der Zeitgebermittel (40) ein durch die Steuereinheit (12) erzeugtes periodisches Signal mit einer Periode ist, die wenigstens eine Größenordnung kleiner als die erforderliche Aktivierungszeit ist.

10. Anordnung (10) nach Anspruch 8, wobei die Zeitgebermittel (40) beschaffen sind, um ein Signal zu emittieren, das das Durchschalten der Schaltanordnung (35) auslöst, wenn der vorgegebene Zeitgrenzwert überschritten ist.

11. Anordnung (10) nach einem der Ansprüche 3 bis 10, wobei die Zeitgebermittel (40) beschaffen sind, um die Leistung über die Spannungsregulierungsmittel (30) vom bordeignen Anlasserschalter zu empfangen.

12. Anordnung (10) nach Anspruch 3, wobei die Freigabemittel (25, 35, 40) eine Freigabe- und Ansteuerschaltung (25) für jeden Verbindungszweig (B₁, B₂, B₃), die einen Pull-up-Widerstand (Rₚᵤ) enthält, der beschaffen ist, um den zugeordneten Befehlseingang (INL, INW, INB) mit dem Leistungsversorgungsknoten (V_{CC_LH}) zu verbinden, und eine Freigabeschaltvorrichtung (SWᵢ), deren Steueranschluss an den zugeordneten Befehlseingang (INL, INW, INB) gekoppelt ist und deren Ausgangsanschluss an den zugeordneten Zweig (B₁, B₂, B₃) für die Verbindung mit dem entsprechenden Ansteuerausgang (D1, D2, D3) gekoppelt ist, umfassen.

13. Anordnung (10) nach Anspruch 12, in der der Pull-up-Widerstand (Rₚᵤ) einen elektrischen Widerstandswert besitzt, um eine Konfiguration zum Deaktivieren eines Befehls von einer allgemeinen Konfiguration zum Aktivieren des Befehls unabhängig von den mehreren Aktivierungskonfigurationen unterscheidbar zu machen, die in dem Fall widerstandscodierter Mehrfachauswahl-Befehlseingänge (INL, INW) möglich sind.

14. Anordnung (10) nach Anspruch 3, wobei die Schaltanordnung (35) einen ersten Bipolartransistor (T1) besitzt, dessen Kollektoranschluss auf eine gesteuerte Art mit den Befehlseingängen (INL, INW, INB) verbunden werden kann, dessen Emitteranschluss mit den Spannungsregulierungsmitteln (30) verbunden ist und dessen Basisanschluss mit dem Kollektoranschluss eines zweiten Bipolartransistors (T2) verbunden ist, dessen Emitteranschluss mit einem Bezugspotential verbunden ist und dessen Basisanschluss mit den Zeitgebermitteln (40) verbunden ist.

## Revendications

1. Agencement de circuit électrique (10) pour la commande de dispositifs de compartiment passagers et de caisse d'un véhicule routier, ayant une pluralité d'entrées de commandes (INL, INW, INB) adaptées pour recevoir des commandes pour l'activation desdits dispositifs, et une pluralité de sorties de commandes (D1, D2, D3) adaptées pour l'émission de signaux pour la commande desdits dispositifs de manière à implémenter les commandes d'entrée reçues, ledit agencement de circuit (10) comprenant une unité de contrôle (12) couplée auxdites entrées de commandes (INL, INW, INB) et auxdites sorties de commandes (D1, D2, D3), et agencée pour reconnaître les commandes d'entrée reçues et générer des signaux de commande de sortie correspondants de manière à établir une voie de commande dans un état opérationnel normal,
**caractérisé en ce qu'**il comprend un circuit de secours d'urgence (LH) comprenant une pluralité de branches de connexion (B₁, B₂, B₃) adaptées pour connecter lesdites entrées de commandes (INL, INW, INB) aux sorties de commandes respectives (D1, D2, D3) au moyen de voies de commande alternatives respectives qui contournent l'unité de commande (12), lesdites branches (B₁, B₂, B₃) comprenant des moyens de validation (25, 35, 40) permettant d'activer lesdites voies de commande alternatives en fonction de la reconnaissance d'un état de fonctionnement défectueux de ladite unité (12).

2. Agencement (10) selon la revendication 1, dans lequel lesdits moyens de validation (25, 35, 40) comprennent des moyens de commutation (35) agencés entre lesdites branches (B₁, B₂, B₃) et un noeud d'alimentation (V_{CC_LH}), adapté pour satisfaire à un état d'inhibition, dans lequel ils excluent la connexion desdites branches (B₁, B₂, B₃) au noeud d'alimentation (V_{CC_LH}), et à l'entrée de commande respective (INL, INW, INB) et un état de conduite dans lequel ils provoquent la connexion desdites branches (B₁, B₂, B₃) au noeud d'alimentation (V_{CC_LH}) et à l'entrée de commande respective (INL, INW, INB).

3. Agencement (10) selon la revendication 2, dans lequel lesdits moyens de commutation (35) comprennent un agencement de commutation adapté pour être contrôlé pendant la conduction par des moyens de temporisation (40) agencés pour reconnaître un état de fonctionnement défectueux de l'unité de commande (12).

4. Agencement (10) selon la revendication 2 ou 3, dans lequel ledit noeud d'alimentation (V_{CC_LH}) est connecté à une source de tension d'alimentation du véhicule au moyen du commutateur de démarrage embarqué.

5. Agencement (10) selon la revendication 4, dans lequel ledit noeud d'alimentation (V_{CC_LH}) est adapté pour recevoir une tension d'alimentation à partir de moyens de régulation de tension respectifs (30) alimentés par une source de tension d'alimentation et indépendants des moyens de régulation de la tension (14) agencés pour alimenter l'unité de commande (12).

6. Agencement (10) selon la revendication 3, dans lequel lesdits moyens de temporisation (40) comprennent un circuit compteur.

7. Agencement (10) selon la revendication 3, dans lequel lesdits moyens de temporisation (40) ont une constante de temps RC.

8. Agencement (10) selon la revendication 3, dans lequel lesdits moyens de temporisation (40) ont une entrée de remise à zéro adaptée pour recevoir des signaux de remise à zéro, émis périodiquement par l'unité de commande (12) et adaptés pour la remise à zéro du comptage de temps desdits moyens de temporisation (40) avant que soit atteinte une valeur limite de temps prédéterminée.

9. Agencement (10) selon la revendication 8, dans lequel le signal pour la remise à zéro des moyens de temporisation (40) est un signal périodique généré par l'unité de commande (12), avec une période au moins d'un ordre de grandeur inférieur au temps d'activation requis.

10. Agencement (10) selon la revendication 8, dans lequel lesdits moyens de temporisation (40) sont agencés pour émettre un signal déclenchant la conduction dudit agencement de commutation (35) lorsque ladite limite de temps prédéterminée est dépassée.

11. Agencement (10) selon l'une quelconque des revendications 3 à 10, dans lequel lesdits moyens de temporisation (40) sont adaptés pour recevoir de l'énergie à partir du commutateur de démarrage embarqué via lesdits moyens de régulation de tension (30).

12. Agencement (10) selon la revendication 3, dans lequel lesdits moyens de validation (25, 35, 40) comprennent un circuit de validation et d'excitation (25) pour chaque branche de connexion (B₁, B₂, B₃), qui comporte une résistance d'enclenchement (Rₚᵤ) adaptée pour connecter ladite entrée de commande associée (INL, INW, INB) audit noeud d'alimentation (V_{CC_LH}), et un dispositif de commutation de validation (SWi), dont le terminal de commande est couplé à l'entrée de commande associée (INL, INW, INB) et dont le terminal de sortie est couplé à la branche associée (B₁, B₂, B₃) pour connexion à la sortie d'excitation respective (D1, D2, D3).

13. Agencement (10) selon la revendication 12, dans lequel ladite résistance d'enclenchement (Rₚᵤ) a une valeur de résistance électrique telle qu'elle permette de distinguer une configuration pour la désactivation d'une commande d'une configuration générale pour l'activation de ladite commande, indépendamment de la pluralité de configurations d'activation possibles dans le cas d'entrées de commandes à sélection multiple et à codage résistif (INL, INW).

14. Agencement (10) selon la revendication 3, dans lequel ledit agencement de commutation (35) a un premier transistor bipolaire (T1 ayant le terminal collecteur apte à être connecté d'une manière commandée auxdites entrées de commandes (INL, INW, INB), le terminal émetteur connecté auxdits moyens de régulation de la tension (30) et le terminal de base connecté au terminal collecteur d'un deuxième transistor bipolaire (T2), dont le terminal émetteur est connecté à un potentiel de référence et dont le terminal de base est connecté auxdits moyens de temporisation (40).
